# EUROPEAN PATENT APPLICATION

(11) **EP 2 257 128 A2**
(43) Date of publication of application: **01.12.2010**
(21) Application number: 09713870.5
(22) Date of filing: 26.02.2009
(51) Int. Cl.: H05B 37/02, F21S 2/00, F21V 5/04

(54) **LED LAMP DEVICE**

(30) Priority: 26.02.2008 KR 20080017067; 25.03.2008 KR 20080027452; 04.09.2008 KR 20080087495; 23.10.2008 KR 20080104478
(71) Applicant: Shim, Hyun Seop, Seoul 139-231 (KR)
(72) Inventor: Shim, Hyun Seop, Seoul 139-231 (KR)
(74) Representative: Banzer, Hans-Jörg
(86) International application number: PCT/KR2009/000930
(87) International publication number: WO 2009/107991

(57) **Abstract**

This invention relates to an LED lamp device which can be applicable to a socket of a general fluorescent lamp, a halogen lamp, an incandescent lamp or the like by embodying an LED illuminating lamp powered by an alternating current (AC) through a simplified rectifier circuit and control of the number of LEDs without a dedicated circuit such as SMPS or the like when constructing the illuminating lamp using the LEDs, and which can reduce manufacturing costs and miniaturize the size of a product. For this purpose, the present invention includes a luminescent body in which a plurality of LEDs is arranged in the form of an illuminating lamp and coupled on at least one side of a base where each component is installed, and in which a transmitting body is secured at the location where the LEDs of the base are disposed, and the light emitted from the LEDs is penetrated and diffused through the transmitting body; a circuit unit installed on the base of the luminescent body and connected to the respective LEDs electrically and electronically for transforming an AC power inputted from the outside into a DC power to enable the LEDs to emit light; and a terminal part disposed one or both ends of the luminescent body for receiving the AC power from the outside and inputting the same to the circuit unit.

## Description

### Technical Field

The present invention relates to an LED lamp device.

More particularly, this invention relates to an LED lamp device which is applicable to a socket for a general fluorescent lamp, a halogen lamp, a incandescent lamp or the like by embodying an LED illuminating lamp powered by an alternating current (AC) through a simplified rectifier circuit and control of the number of LEDs without a dedicated circuit such as SMPS or the like, when constructing an illuminating lamp using the LEDs, and which can reduce manufacturing costs and miniaturize the dimension of a product. Further, this invention relates to an LED lamp device powered by an AC power source in which an intensity of illumination of the LED illuminating lamp can be automatically or manually controlled in response to the luminance of the inside or outside of a room, a noise level or the like, thereby enabling the illuminating device to be operated with less power, and which is capable of being operated safely and stably against an over-voltage and over-current. Specifically, this invention relates to an LED lamp device which allows the heat emitted from the LEDs of the LED illuminating lamp to be efficiently discharged, thereby making the illuminating lamp operable in a stable manner.

Further, this invention relates to an LED lamp device wherein the illuminating lamp composed of the LEDs can concentratingly irradiate the light in a vertically downward direction or a specific direction to emit the same, thereby embodying lighting with a high intensity of illumination.

Moreover, this invention relates to an LED lamp device wherein the illuminating direction of an angular section where the light emitted from the LEDs is irradiated with the highest luminance is determinable, so that an optimal lighting can be embodied in response to the installation height and position of the illuminating lamp.

Besides, this invention relates to an LED lamp device which embodies a lamp-shaped LED illuminating lamp to be coupled with a socket for an incandescent lamp powered by AC, thereby expanding the application range of the LED lighting.

### Background Art

In general, in order to use an incandescent lamp as an indoor lighting, the incandescent lamp requires an incandescent lamp bulb emitting light through a filament and a socket receiving the incandescent lamp bulb and applying an AC power to the same. At this point, the electrode of the incandescent lamp bulb is in the form of a screw to receive the AC power inputted through the socket, while the electrode of the socket is formed in a screw shape in response to the screw-shaped electrode of the incandescent lamp bulb.

Although the frequency in commercial use of the incandescent lamp has been remarkably reduced due to the advent of fluorescent lamps, the incandescent lamp socket has still been employed for the indoor lighting inside the building up to now because of the appearance of halogen lamps.

Meanwhile, as an indoor lighting inside the building which has been widely used recently, the fluorescent lamp or halogen lamp is typically installed on the ceiling or wall. However, such a fluorescent lamp or halogen lamp still consumes lots of power compared with the general indoor illuminating lamp, mainly providing illumination in a single color.

In order to solve the drawbacks of high power consumption and monotony of the illumination as such, an LED illuminating lamp which can produce lighting in various colors with less power consumption than the fluorescent lamp or halogen lamp has been manufactured and sold in the market.

The LED lamp device as described above, that is, the LED lamp device applied as an indoor lighting of the building using LEDs has been widely used as a main lamp of a household or an office, or a stand lamp on the desk, and exemplifies an illumination tile using a light guiding plate as a much more developed pattern in the preferred embodiment.

In the illuminating device as the above, a plurality of LED modules mounted with plural LEDs is placed in a particular arrangement, and the LED modules are installed on the ceiling, the wall surface or the like of an indoor space. Further, when the illuminating lamp embodied by the LEDs is applied as a main lighting of a room, a plurality of LEDs is mounted on a printed circuit board (PCB), and a transmitting cover for diffusing and transmitting the light in a forward direction of the light emitted from the LEDs. The LED illuminating lamp is installed on the ceiling, the wall surface or the like of the indoor space.

Specifically, the LED module (or illuminating lamp) is provided with an A/D converter to convert the AC power inputted from the outside into the DC power as the LED has characteristics of being driven by a direct current with a proper voltage. At this point, the A/D converter is accompanied by a transformer circuit having a trans-coil to lower the voltage of an alternate current, and the transformer circuit has drawbacks in that since the transformer circuit is arranged occupying a large space in the LED module, the dimension of the product having the same becomes large.

In order to solve the problems as described above, a power supply device called SMPS (Switching Mode Power Supply) has been recently applied to a small illuminating device employed with the LEDs. The SMPS is designed to transform the frequency of the AC power into a high frequency of the DC power, which can embody a much more miniaturized and lighter converting circuit than that of the conventional transformer.

Here, the SMPS transforms the AC frequency (50Hz - 60Hz) into the high DC frequency (several tens of kHz - several hundreds of kHz) and uses the latter, so it requires high technologies accordingly. In addition, the SMPS is a device to maximize the utilization rate of the power source using a PWM (Pulse width Modulation) method to transform the frequency thereof.

### Disclosure

### Technical Problem

The socket coupled with the conventional incandescent lamp or halogen lamp as the above is a dedicated component to receive the AC power source, so it cannot be applied to other illuminating lamps except for the incandescent lamp or the halogen lamp, which limits the utilization range of the illuminating device. Particularly, it has disadvantages of costing money and time such as new electrical works or the like in order to install the LED lamp device to the building provided with the socket as described above.

Furthermore, there are also problems in that since the SMPS in the LED illuminating lamp transforms the AC power of 220V (standard voltage in Korea) into the DC power of 12V to 24V, it requires a considerably large amount of current capacities, causing an energy loss. Particularly, the SMPS with a high current capacity is a very expensive component, which considerably increases the manufacturing cost of the LED lamp device. Even though the SMPS module has been remarkably miniaturized and light-weighted, compared with the LED module which has been typically manufactured in much smaller size than the SMPS, it is still manufactured in bigger size than the LED module, resulting in limitations on the miniaturization and light-weight of the LED illuminating lamp.

Besides, the LED illuminating lamp radiates lots of heat due to the characteristics of the LED, so a separate fan needs to be installed to discharge the heat to the outside in the conventional construction of the illuminating device. At this point, since the construction of the fan increases the manufacturing cost of the product and also causes a lot of noise, the manufacturer may be likely to fabricate the LED illuminating lamp without the fan construction, which exposes drawbacks in that the operation of the LED illuminating lamp is unstable due to the heat of the LEDs and the life span of the product is shortened.

Among the construction of the conventional illuminating devices, the fluorescent lamp or the halogen lamp is charged with a fluorescent substance or halogen gas in a glass tube, irradiating light by an electrical action thereof. At this moment, since the enlightened glass tube radiates light in all directions from the entire outer surfaces, it has drawbacks in that it is hard to concentrate the light downward within the room where the resident wants a high intensity of illumination, thereby leading to a low luminance.

At the same time, since the conventional LED illuminating lamp has typically a transmitting cover with a specific transmission rate and a light diffusion rate which is disposed in front of a plurality of LEDs arranged to emit light, it is prescribed at the time of manufacture for the LED illuminating lamp to be used at a specific height. In other words, the LED illuminating lamp currently manufactured and sold is so standardized that the light emitted from the LED should be irradiated vertically downward from the height of the ceiling of the room for a residential purpose.

Further, when the installation location of the LED illuminating lamp has to be heightened due to the predetermined design of the building, the intensity of illumination of the lamp becomes lowered accordingly and increases the installation costs because of the increased number of the illuminating lamps to be added. Moreover, when the light has to be irradiated in a slanted direction, not vertically downward according to a user's request, a separate reflector should be provided in response to the angle of the irradiating direction of the light, which incurs far more installation costs and extends installation time therefor lowering the work efficiency.

Therefore, the present invention has been made in view of the above-mentioned problems, and the primary object of the present invention is to provide an LED lamp device which is constructed as an illuminating module to be applicable to a socket for a general fluorescent lamp, and the illuminating module of the LEDs is directly powered by an alternating current through a simplified rectifier circuit and control of the number of LEDs, which makes it possible to reduce the manufacturing cost and miniaturize the dimension of a product, wherein an intensity of illumination can be automatically or manually controlled depending upon the luminance of the inside or outside of a room, a noise level or the like to minimize the power consumption and provide convenience in use, and wherein the heat emitted during the operation of the LEDs can be efficiently discharged to allow the illuminating device to be driven much more safely and stably.

A second object of the present invention is to provide an LED lamp device which in embodying an illuminating device using the LEDs, the illuminating device is designed to enable the light to be irradiated within the luminescent body in a rectangular plate shape so as to perform the concentrated irradiation of the light in a vertically downward direction or any lateral direction, which can be optimized for application as an indoor illuminating lamp of the buildings.

A third object of the present invention is to provide an LED lamp device which can concentrate the light emitted from the LEDs in response to the height of the ceiling where the LED illuminating lamp is installed and the installation position of the illuminating lamp to be irradiated in a vertically downward direction, and simultaneously, which can determine the irradiating direction of an angular section where the light is concentrated and irradiated in the highest luminance.

A fourth object of the present invention is to provide an LED lamp device which can embody the LED lamp device to be coupled with a socket for the incandescent lamp or the halogen lamp, thereby resolving the economic disadvantages due to expansion of the application range of the lighting and new electrical works.

### Technical solution

In accordance with the present invention to achieve the first object thereof, there is provided an LED lamp device, including: a luminescent body wherein a plurality of LEDs is arranged in the form of an illuminating device and coupled on at least either side of a base where each component is installed, wherein a transmitting body is secured at the location where the LEDs of the base are disposed, and wherein light emitted from the LEDs diffuses after penetrating the transmitting body; a circuit unit installed on the luminescent body of the base and connected to the respective LEDs electrically and electronically for transforming an AC power inputted from the outside into a DC power to enable the LEDs to emit light; and a terminal part disposed either end of the luminescent body for providing the AC power inputted from the outside to the circuit unit.

At this point, the circuit unit includes a power source part for receiving an AC power to be a driving source of the device from the outside; a rectifying part for rectifying the inputted power through a bridge rectifier circuit; and a LED driving part for operating the LEDs with a rectified power provided by the rectifying part and with a desired voltage provided by a plurality of LEDs and a resistance connected in series corresponding to the inputted power.

Further, the circuit unit includes a dimming part which can modulate the driving luminance of the LEDs through PWM controls by controlling the amount of the current inputted. Here, the dimming part includes a sensing part for detecting a signal to modulate the luminance of lighting depending upon environmental factors such as luminance of the inside or outside of a room, a level of noise or the like. Particularly, the dimming part is subjected to be manually controlled by a wire or wireless connection through a remote controller.

In addition, the circuit unit further includes an AC voltage inputted to the bridge rectifier circuit, and an input voltage controlling part for limiting the current supply to operate the LEDs through monitoring an AC voltage inputted to the bridge rectifier circuit 451 and a DC voltage having passed the bridge rectifier circuit. Also, the circuit unit further includes an output current controlling part for controlling an over-current applied to the LEDs by connecting a shunt resistor to the LEDs and amplifying the voltage valued detected at the shunt resistor.

Meanwhile, the base is coupled with a PCB on which the LEDs and the circuit unit is installed at the side where the transmitting body is secured to, and the base is formed with a heat radiating part at the rear of the side to which the transmitting body is secured for discharging the heat generated in the LEDs and the circuit unit. Here, the base is designed to fill heat conducting resins into a gap between the PCB and the heat radiating part so as to increase the transmitting area of the heat generated in the LEDs and the circuit unit to the heat radiating part through the PCB. Specifically, the base is constructed to be separated into both sides so as to receive the PCB therebetween, and the separated base is fastened by a fastening means to be a unitary one after being coupled at both sides of the PCB.

In accordance with the present invention to achieve the second object thereof, there is provided an LED lamp device, including: a luminescent body wherein a plurality of LEDs is arranged in the form of an illuminating device and coupled on at least either side of a base where each component is installed, wherein a transmitting body in the form of a rectangular-cross sectional flat plate is secured at the location where the LEDs of the base are disposed, and wherein the light emitted from the LEDs concentratingly discharges after penetrating the opposite flat surfaces of the transmitting body; a circuit unit installed on the luminescent body of the base and connected to the respective LEDs electrically and electronically for transforming an AC power inputted from the outside into a DC power to enable the LEDs to emit light; and a terminal part disposed either end of the luminescent body for providing the AC power inputted from the outside to the circuit unit.

Here, the base is coupled with a PCB on which the LEDs and the circuit unit is installed at the side where the transmitting body is secured to, and the base is formed with a heat radiating part at the rear of the side to which the transmitting body is secured for discharging the heat generated in the LEDs and the circuit unit. In addition, the base is designed to fill heat conducting resins into a gap between the PCB and the heat radiating part so as to increase the transmitting area of the heat generated in the LEDs and the circuit unit to the heat radiating part through the PCB.

Meanwhile, the circuit unit includes a power source part for receiving an AC power to be a driving source of the device from the outside; a rectifying part for rectifying the inputted power through a bridge rectifier circuit; and a LED driving part for operating the LEDs using the rectified power provided by the rectifying part and using the a voltage provided by a plurality of LEDs connected in series corresponding to the inputted power.

Particularly, the transmitting body is applied with a light diffusion resin to emit the light by diffracting and diffusing thereof when the emitted from the LEDs is penetrated therethrough.

In accordance with the present invention to achieve the third object thereof, there is provided an LED lamp device, including: an LED illuminating lamp in the form of a fluorescent lamp in which LEDs are arranged in one direction to emit light by an external power source, wherein the LED illuminating lamp is provided with a tube shaped light transmitting cover toward the outside where the light of the LEDs is emitted, and wherein the LED illuminating lamp is provided with a terminal coupled with a socket of the fluorescent lamp for applying the power source at the both sides of the light transmitting cover; and a lens disposed in front of the LEDs within the light transmitting cover of the LED illuminating lamp for transmitting the light emitted from the LED while maintaining a constant direction and angle of the same and irradiating the light through the light transmitting cover.

The LED lamp device includes a circuit unit installed at a socket of a fluorescent lamp to provide a general AC power to be driven, wherein the circuit unit includes a rectifying part for rectifying the AC power inputted through the socket of the fluorescent lamp with a bridge rectifier circuit; and a LED driving part for operating the LEDs using the rectified power provided by the rectifying part and using a voltage provided by a plurality of LEDs connected in series corresponding to the inputted power.

At this moment, the lens is formed in the shape of a bar in response to the length of the LEDs arranged in one direction. Particularly, the ends of the lens, where the light is radially irradiated in either both sides or the center side on the cross-section of the light transmitting cover so as to establish the irradiating direction of the light, is eccentrically formed. In addition, the lens is formed with a convex inclined surface in the irradiating direction of the light to illuminate the light with a narrow angle and an extending length. At the same time, the lens is formed with a concave inclined surface in the irradiating direction of the light to illuminate the light with a wide angle and a short length.

In accordance with the present invention to achieve the fourth object thereof, there is provided an LED lamp device, including: a socket for inputting an external AC power source, and a bulb-shaped LED module electrically coupled with the socket for enabling LEDs to emit light by receiving the AC power, wherein the LED module includes a power source part for receiving an AC power to be a driving source of the device from the outside; a rectifying part for rectifying the inputted power through a bridge rectifier circuit; and a LED driving part for operating the LEDs using the rectified power provided by the rectifying part and using a desired voltage provided by a plurality of LEDs and a resistance connected in series corresponding to the inputted power.

Here, the LED module is constructed as the LEDs of the LED driving part are disposed in a round shape at the end emitting the light to expand the emitting angle of the light. Meanwhile, the power source part includes a fuse to cut off the power input when an excessive AC power exceeding the rating is inputted from the outside.

The LED lamp device in accordance with the present invention further includes a controller for modulating the luminance of the LEDs by controlling the amount of the input current through a PWM control.

In addition, the LED driving part is composed of a plurality of combinations in parallel where one combination consists of a plurality of the LEDs and a resistance in series.

### Advantageous Effects

The present invention as described above has advantageous effects in that the inputted power can be converted from the AC to the DC through a simplified configuration in which a proper number of the LEDs connected with a bridge rectifier circuit are arranged. Further, since the luminance of the LED lighting is automatically or manually controlled by a dimming part in response to the luminance of the inside or outside of a room, a noise level or the like, it has effects in that energy wasting factors can be resolved by reducing the power consumption due to the driving of the LED illuminating lamp, and further an economical LED lamp device can be obtained. Moreover, the present invention with the simplified construction as the above has advantageous effects in that since the manufacturing costs are reduced and the dimension of the product is miniaturized, the sales efficiency can be facilitated by reduction of the sales cost of the product, and the application range of the product can be expanded due to the miniaturization of the product.

Particularly, the present invention has advantageous effects in that it can cut off or control the loads in the circuit against an over-voltage and an over-current, so as to ensure a safe and a stable use of the LED illuminating lamp to obtain a user's credibility on the product.

Further, it should be noted that since the inventive LED lamp device is designed to be driven by being coupled with the socket for the general fluorescent lamp or halogen lamp, it is applicable to the indoor or outdoor lighting without replacement of the separate socket of the illuminating lamp, such that the LED lamp device can be much more economically utilized.

Moreover, it should be appreciated that the light emitted from the LEDs is experienced to efficiently discharge its heat from the base on which the LEDs are mounted to the heat radiating part of the base, which makes it possible to drive the illuminating lamp with more stability and simultaneously to extend the life span of the product.

Meanwhile, the present invention has advantageous effects in that the light from the LED illuminating lamp is concentratingly irradiated in a vertically downward or any lateral direction by a rectangular plate-shaped housing, in such a manner as to irradiate the desired indoor space with much higher intensity of illumination.

Besides, it can be noted that since the light emitted from the LEDs is penetrated through the lens to be discharged, it can embody an optimized illuminating lamp with respect to the surroundings in response to the installation height of the illuminating lamp itself and the installation position thereof.

Particularly, it should be appreciated that the LED illuminating lamp can be applied to the socket for coupling the incandescent lamp or the halogen lamp to apply the AC power thereto, thereby expanding the application range of the illuminating lamp to be applied to the socket.

### Brief Description of the Drawings

The foregoing and other objects, features and advantages of the present invention will become more apparent from the following detailed description when taken in conjunction with the accompanying drawings in which:
FIG. 1 is a perspective view illustrating an LED lamp device in accordance with the present invention;
FIG. 2 is a cross-sectional side elevation view illustrating the LED lamp device in accordance with the present invention;
FIG. 3 is a plan view illustrating a terminal part of the LED lamp device in accordance with the present invention;
FIG. 4 is a block diagram of the LED lamp device in accordance with the present invention;
FIG. 5 is a circuit diagram illustrating a circuit unit of the LED lamp device in accordance with the present invention;
FIG. 6 is a circuit diagram illustrating a dimming part of the LED lamp device in accordance with the present invention;
FIG. 7 is a circuit diagram illustrating an input voltage controlling part of the LED lamp device in accordance with the present invention;
FIG. 8 is a circuit diagram illustrating an output current controlling part of the LED lamp device in accordance with the present invention;
FIG. 9 is a perspective view illustrating another embodiment 1 of the present invention;
FIG. 10 is an enlarged perspective view illustrating another embodiment 1 of the present invention;
FIG. 11 is a cross-sectional view illustrating another embodiment 1 of the present invention;
FIG. 12 is an enlarged plan view illustrating a terminal part in accordance with another embodiment 1 of the present invention;
FIG. 13 is a block diagram illustrating a circuit unit in accordance with another embodiment 1 of the present invention;
FIG. 14 is a cross-sectional view illustrating an exemplary operational state of another embodiment 1 of the present invention;
FIG. 15 is a perspective view illustrating another embodiment 2 of the present invention;
FIG. 16 is an enlarged cross-sectional view illustrating another embodiment 2 of the present invention;
FIG. 17 is a block diagram illustrating a circuit unit in accordance with another embodiment 2 of the present invention;
FIGs. 18 to 20 are views each illustrating an exemplary lens according to a light irradiating direction in accordance with another embodiment 2 of the present invention;
FIGs. 21 and 22 are views each illustrating an exemplary lens according to a light irradiating length in accordance with another embodiment 2 of the present invention;
FIG. 23 is an enlarged cross-sectional view illustrating another embodiment 3 of the present invention;
FIG. 24 is a circuit diagram illustrating an LED module in accordance with another embodiment 3 of the present invention; and
FIG. 25 is an enlarged cross-sectional view illustrating another embodiment 4 of the present invention.

### <Descriptions on reference numbers for the major components in the drawings>

- 10:: luminescent body 11: base
- 12:: transmitting body 13: heat radiating part
- 14:: heat conducting resin 20: circuit unit
- 30:: terminal part
- 110:: LED illuminating lamp
- 120,: 120a-120e: lens 130: base
- 140:: light transmitting cover 150: circuit unit
- 151:: power source part 152: rectifying part
- 160:: LED driving part 201: socket
- 202:: LED module 210: power source part
- 212:: fuse 220: rectifying part
- 221:: bridge rectifier circuit 230: LED driving part
- 231:: LED elements 232: resistance
- 240:: controller 250: light guiding plate
- 410:: luminescent body 420: circuit unit
- 430:: terminal part

### Best Mode

### Mode for Invention

Hereinafter, exemplary embodiments of the present invention will be described in detail with reference to the accompanying drawings.

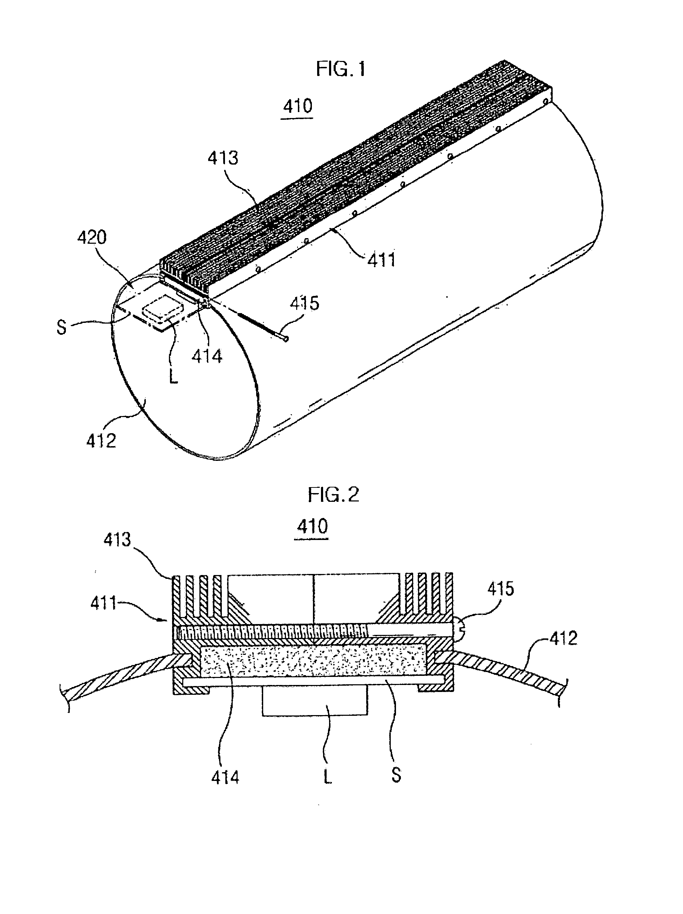

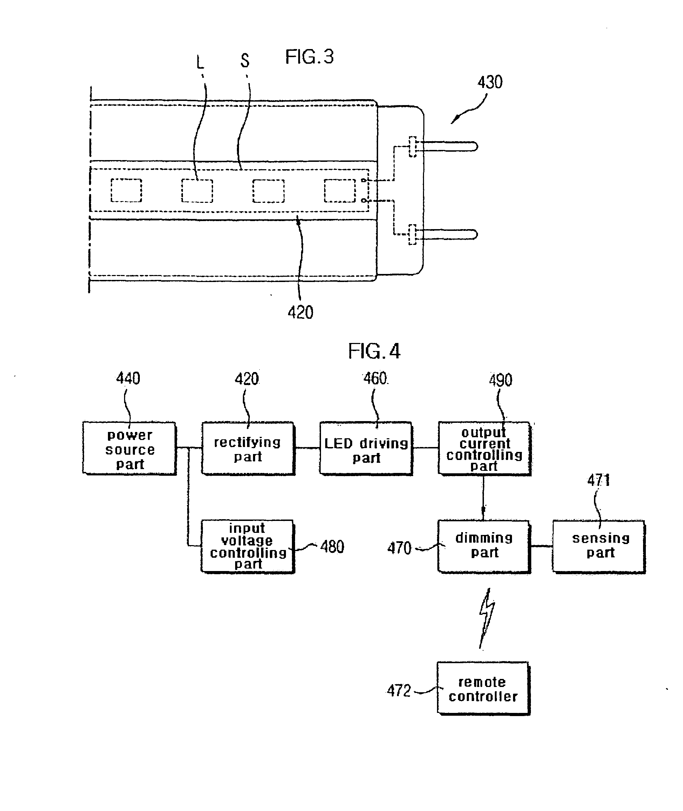

FIG. 1 is a perspective view illustrating an LED lamp device in accordance with the present invention, FIG. 2 is a cross-sectional side elevation view illustrating the LED lamp device in accordance with the present invention; and FIG. 3 is a plan view illustrating a terminal part of the LED lamp device in accordance with the present invention.

Referring to the drawings, the LED lamp device in accordance with the present invention typically includes a luminescent body 410, a circuit unit 420, and a terminal part 430.

The luminescent body 410 is composed of a base 411 and a transmitting body 412. Here, the base 411 is designed to provide a space for installing the circuit unit 420, while the transmitting body 412 is a construction through which light emitted from the LED elements (L) mounted together on the PCB (S) of the circuit unit 420 is penetrated and expanded to provide lighting.

The luminescent body 410 as the above is provided with a plurality of LED elements (L) which are arranged in the form of an illuminating lamp and secured to at least either surface (bottom surface in the drawings) of the base 410. At this point, the form of the illuminating lamp shown in the drawings is proposed as a fluorescent lamp, in which a plurality of LED elements (L) are aligned in series and mounted lengthwise on the PCB (S).

The base 411 is a construction formed in the shape of a beam having a lengthwise direction. The base 411 is provided with a heat radiating part 413 on the surface to which the PCB (S) is secured, i.e., a rear surface of the surface on which a transmitting body 412 to be described hereinafter is coupled, so as to radiate the heat discharged from the electric or electronic elements of the circuit unit 420 towards the outside. Particularly, in order to provide the heat radiating part 413 as such, the base 411 is made from aluminum materials with a high heat radiating efficiency, and the heat radiating part 413 may be provided with a plurality of heat radiating fins being projected so as to increase heat radiating areas as well.

Further, the base 411 is filled with a heat conducting resin 414 in a gap between the PCB (S) and the heat radiating part 413 in order to deliver the heat generated at the LED elements (L) and the circuit unit 420 to the heat radiating part 413 through much larger areas. At this point, the heat conducting resin includes epoxy, silicone resin or the like with a high thermal conductivity and also functions to alleviate physical impacts delivered from the outer surface of the base 411.

In addition, the base 411 has a construction to be so separated into two members that the PCB (S) is secured to the inside thereof. With the construction as such, the PCB (S) maintains a coupled state in which the opposite ends of the PCB (S) are secured to the inside surface of the base 411 and supported thereby. In such a state, an integrally formed configuration of the base 411 is embodied by fastening a fastening member 415 such as a bolt, a piece or the like to the base 411.

Meanwhile, the transmitting body 412 is made by mixing a resin of an acrylic resin such as PC, PMMA, ABS, PS or the like or a resin through which the light can be penetrated and a light diffuser, and the transmitting body 412 is a member in which the light emitted from the LED elements (L) is transmitted and diffused to embody lighting over much broader sections.

Particularly, the transmitting body 412 is formed in the shape of a cylinder like a fluorescent lamp or a halogen lamp, and maintains its shape in which the opposite ends of the transmitting body 412 are supported at both sides of the base 411. Preferably, the transmitting body 412 has a construction to be disposed outside the LED elements (L) enclosing the same, which enables the light emitted from the LED elements (L) to be transmitted over the entire section thereof.

The circuit unit 420 is provided with a variety of electric and electronic elements mounted on the PCB (S) which is coupled with the base 411 of the luminescent body 410. The circuit unit 420 as the above is a construction which is electrically or electronically connected to the respective LED elements (L) so as to transform the AC power inputted from the outside into the DC power for enabling the LED elements (L) to emit the light. The detailed construction of the circuit unit 420 will be described in detail with reference to FIGs. 4 to 8 hereinbelow.

The terminal part 430 is a construction for a power input, which is installed at one end or both ends of the luminescent body 410. The terminal part 430 has a construction like a terminal for a fluorescent lamp secured to the opposite ends of the luminescent body 410 as the luminescent body 410 is configured in the form of a fluorescent lamp.

This terminal part 430 means that it is constructed to be used for applying the LED lamp device of the present invention to the ordinary socket for the fluorescent lamp or the halogen lamp, which is generally provided in the building, without any further works or alteration of such sockets.

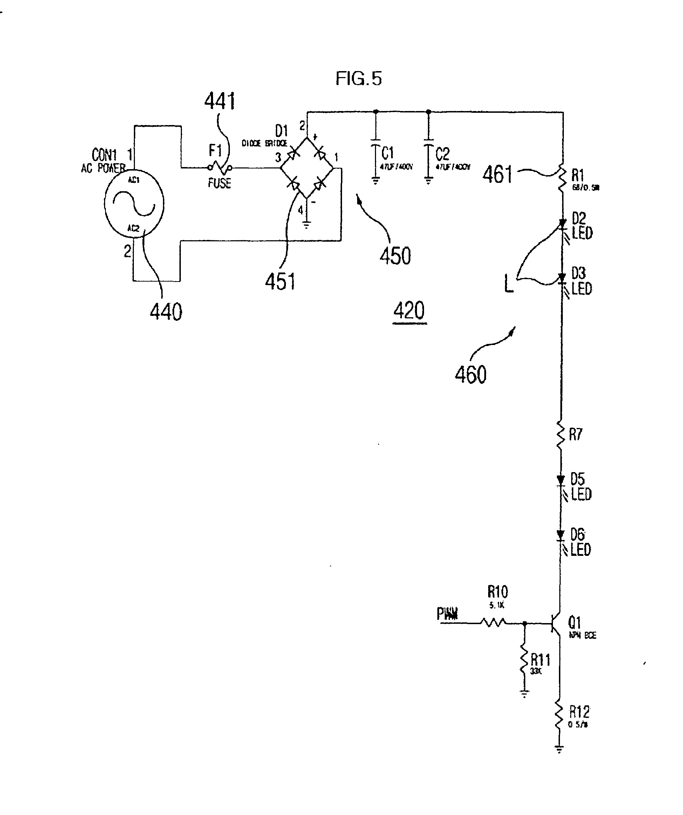

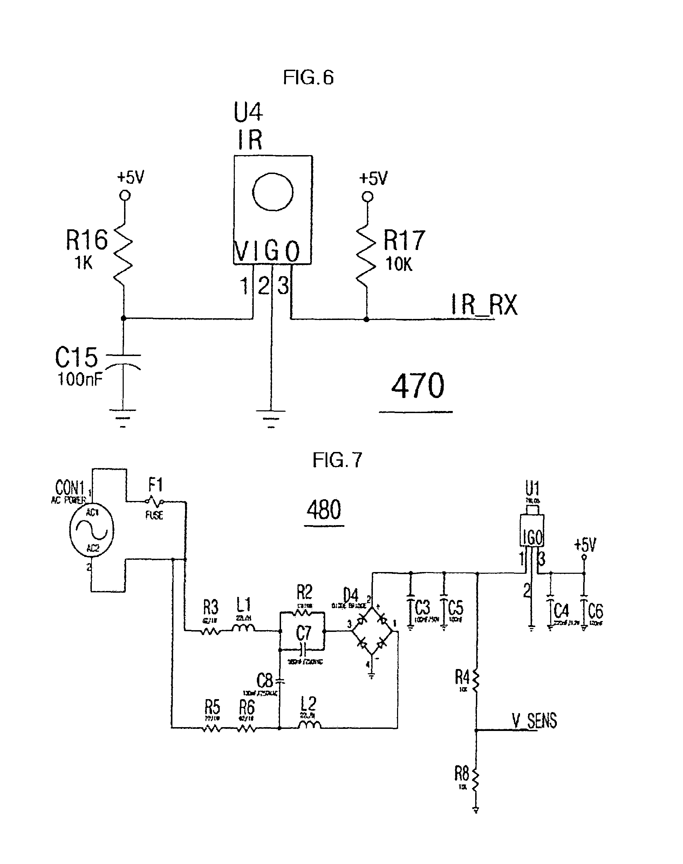

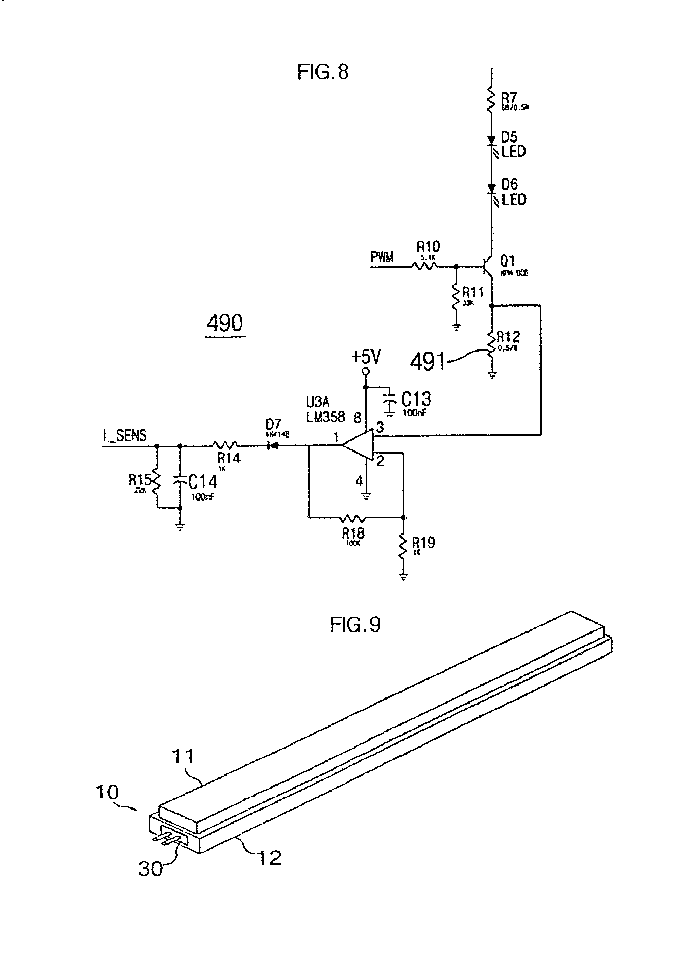

FIG. 4 is a block diagram of the LED lamp device in accordance with the present invention, FIG. 5 is a circuit diagram illustrating a circuit unit of the LED lamp device in accordance with the present invention, FIG. 6 is a circuit diagram illustrating a dimming part of the LED lamp device in accordance with the present invention, FIG. 7 is a circuit diagram illustrating an input voltage controlling part of the LED lamp device in accordance with the present invention, and FIG. 8 is a circuit diagram illustrating an output current controlling part of the LED lamp device in accordance with the present invention.

Referring to FIGs. 4 and 5, a circuit unit 420 has a basic construction including a power source part 440, a rectifying part 450, and an LED driving part 460.

The power source part 440 is a construction for receiving an AC power source, a driving source for the illuminating device from the outside. In this embodiment, the external AC power source has a voltage of 220V, a Korean Standard voltage, and the number of the LED elements (L) of the driving part 460 as described below is designated accordingly.

Particularly, the power source part 440 includes a fuse 441 to interrupt the external power source in case of a particular situation. At this moment, the particular situation means that an excessive AC power exceeding the rating is inputted from the outside because of unexpected factors such as a short circuit or the like.

The rectifying part 450 is constructed as a diode circuit to rectify the power inputted. Here, a bridge rectifier circuit 451 is employed for the diode circuit.

Meanwhile, the LED driving part 460 is configured as a serial connection of a plurality of the LED elements (L) and a resistance 461 in response to the power source of 220 V as described above. The LED driving part 460 is a construction to drive the LED elements (L) with a desired voltage by using the rectified power provided from the rectifying part.

In other words, as shown in the drawings, when the external AC power of 220V is inputted and the driving voltage of the LED elements (L) is 3.2V, a stable circuit can be obtained by arranging sixty (60) LED elements (L) to which the voltage of 192V is distributed and applied, while the remaining voltage of 8V being applied to the resistance.

In order to extend the LED driving part 460 more, a plurality of groups, in which plural LED elements (L) and a resistance 461 in series constitute one group, is connected in parallel.

The circuit unit 420, as shown in FIGs. 6 to 8, includes a dimming part 470, an input voltage controlling part 480, and an output current controlling part 490.

Referring to FIG. 6, the dimming part 470 is designed to modulate the driving luminance of the LED elements (L) through PWM controls by controlling the amount of the current inputted. To this end, the dimming part can be embodied by connecting an infrared interface circuit to the circuit unit 420.

The dimming part 470 as the above includes a sensing part 471 as shown in FIG. 4. Here, the sensing part 471 includes a light sensor, a noise sensor or the like for detecting a signal to control the luminance of lighting depending upon environmental factors such as the brightness of the inside or outside of a room, a noise level or the like.

In other words, the sensing part 471 is provided with a photo sensor at the outside of the building so that the illuminating lamp is turned off when the sunlight from the outside is irradiated in or during the daytime, while the illuminating lamp is turned on when the sunlight from the outside is not irradiated in or during the nighttime, thereby removing the power wasting factors. Otherwise, the sensing part 471 may be constructed to turn on or off the illuminating lamp by measuring the amount of noise, i.e., a noise level caused by people coming in or out of the building.

The dimming part 470 includes a remote controller 472 so as to manually perform the PWM controls, and the remote controller 472 is configured to be wired or wireless connection.

Referring to FIG. 7, the input voltage controlling part 480 is constructed to limit the current supply to drive the LED elements (L) by monitoring the AC voltage to be inputted to the bridge rectifier circuit 451 and the DC voltage having passed through the bridge rectifier circuit 451.

The input voltage controlling part 480 as the above, for example, limits the driving current of the LED elements (L) through the PWM controls by monitoring the input voltage and the driving current of the LED elements (L), because there is a possibility that more current than the allowable current for the LED elements (L) can be applied when a voltage over 220V is inputted due to the unstable input voltage. At this moment, the confirmation of the input voltage can be performed by checking the inputted voltage which is proportionally lowered through the bridge rectifier circuit 451 and by A/D converting the same.

Referring to FIG. 8, the output current controlling part 490 is configured to control the over-current applied to the LED elements (L) by connecting a shunt resistor 491 to the LED elements (L) and amplifying the voltage detected at the shunt resistor 491.

The output current controlling part 490 as the above measures the voltage detected at the shunt resistor 491 by amplifying the small value of the voltage, determines the voltage value being measured, and interrupts the power source to be applied to the LED elements (L) when the over-current is inputted to the LED elements (L).

The present invention as described hereinabove can be applied as lighting for the indoor space to be turned on or off by means of the luminance of the inside or outside of the room or the noise level, and further may be embodied as applications for a variety of illuminating lamp such as street lamps to be turned on or off in response to the change of day and night.

### <Another embodiment 1>

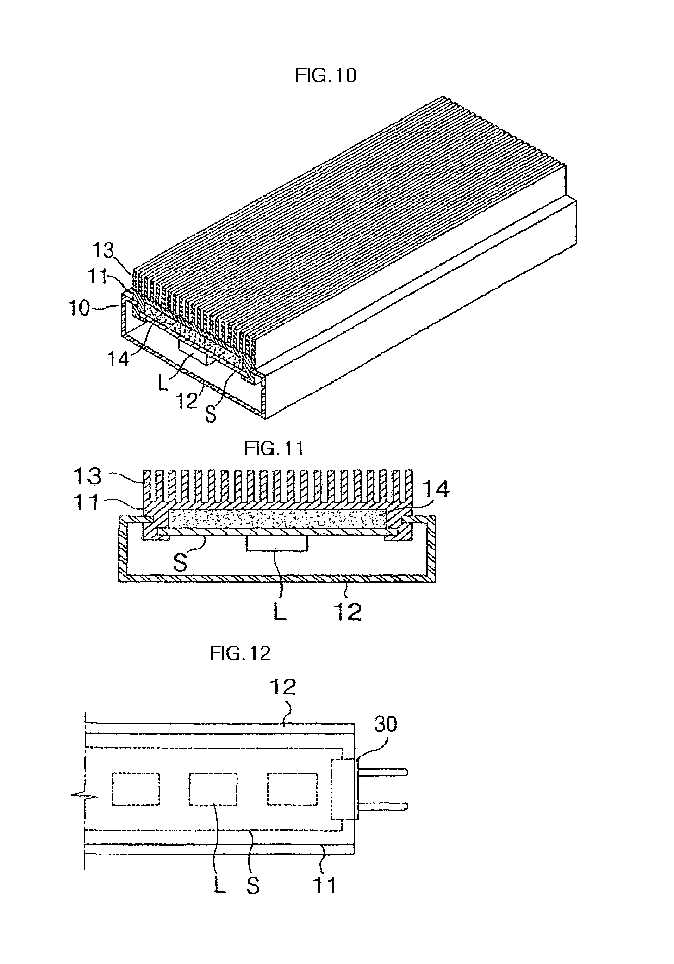

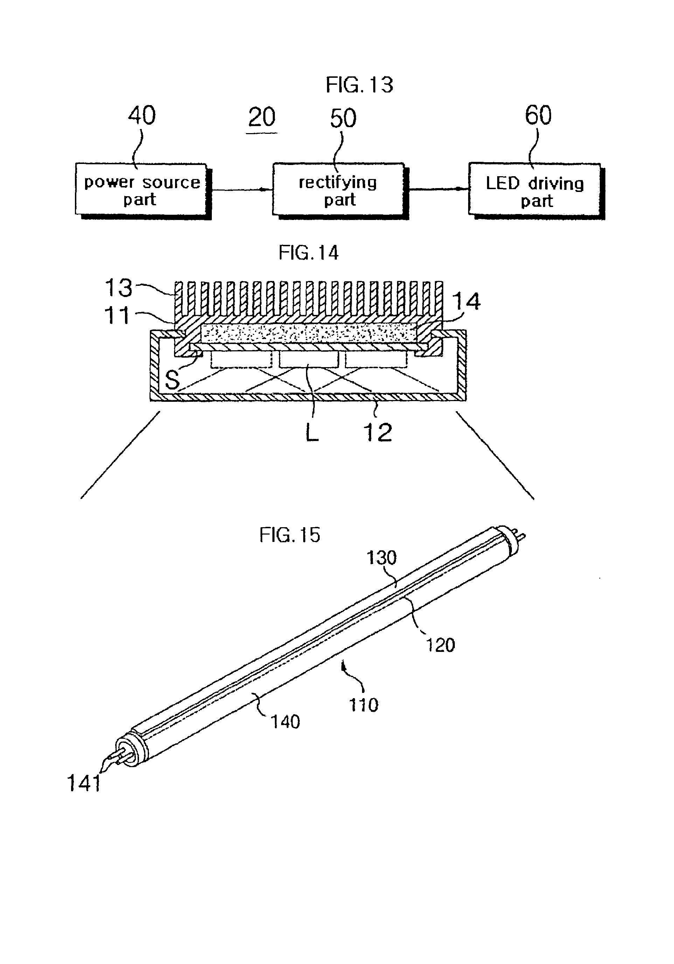

FIG. 9 is a perspective view illustrating another embodiment 1 of the present invention, FIG. 10 is an enlarged perspective view illustrating another embodiment 1 of the present invention, FIG. 11 is a cross-sectional view illustrating another embodiment 1 of the present invention, FIG. 12 is an enlarged plan view illustrating a terminal part in accordance with another embodiment 1 of the present invention, and FIG. 13 is a block diagram illustrating a circuit unit in accordance with another embodiment 1 of the present invention.

Referring to the drawings, an LED lamp device in accordance with another embodiment 1 of the present invention typically includes a luminescent body 10, a circuit unit 20, and a terminal part 30.

The luminescent body 10 is a construction to be an exterior décor of an illuminating lamp, and consists of a base 11 having a heat radiating function and a transmitting body 12 for diffusing and transmitting the light emitted from the inside of the luminescent body 10. The luminescent body 10, as shown in FIG. 2, has a rectangular cross-section, preferably being in the form of a flat plate to focus and irradiate the light in a vertical downward or any desired direction (a direction in which the light of the LED is proceeded and irradiated).

Here, the base 11 is designed to provide a space for installing the circuit unit 20, and the transmitting body 12 is a construction through which the light emitted from LED elements (L) mounted on the PCB (S) of the circuit unit 20 is penetrated and diffused to provide lighting.

The luminescent body 10 as the above is provided with a plurality of LED elements (L) which are arranged in the form of an illuminating lamp and secured to at least either surface (bottom surface in the drawings) of the base 11. At this point, the form of the illuminating lamp shown in the drawings is proposed as a fluorescent lamp, in which a plurality of LED elements (L) are aligned in a line or plural lines and mounted on the PCB (S) having a lengthwise direction.

The base 11 is formed in the shape of a beam having a lengthwise direction. The base 11 is provided with a heat radiating part 13 on the surface to which the PCB (S) is secured, i.e., a rear surface of the surface on which a transmitting body 12 to be described hereinafter is coupled, so as to radiate the heat discharged from the electric or electronic elements of the circuit unit 20 towards the outside.

Particularly, in order to construct the heat radiating part 13 as such, the base 11 is made from aluminum materials with a high heat radiating efficiency, and the heat radiating part 13 is provided with a plurality of heat radiating fins being projected to increase heat radiating areas as well.

Further, the base 11 has a construction filled with a heat conducting resin 14 in a gap between the PCB (S) and the heat radiating part 13 in order to deliver the heat generated at the LED elements (L) and the circuit unit 20 to the heat radiating part 13 through much larger areas. At this point, the heat conducting resin includes epoxy, silicone resin or the like with a high thermal conductivity and also functions to alleviate physical impacts delivered from the outer surface of the base 11.

Meanwhile, the transmitting body 12 is made by mixing a resin of an acrylic resin such as PC, PMMA, ABS, PS or the like or other resins through which the light can be penetrated and a light diffuser (referred to as a light diffusing resin hereinafter). The transmitting body 12 is a construction in which the light emitted from the LED elements (L) is transmitted and diffused to embody lighting over much broader sections.

Particularly, the transmitting body 12 is a construction to retain the entire shape of the luminescent body 10 in a rectangular flat plate shape as shown in the drawings, and maintains its bent shape with a rectangular cross-section in which the opposite ends of the transmitting body 12 are supported at both sides of the base 11.

At this point, the transmitting body 12 is preferably constructed to be disposed outside the LED elements (L) enclosing the same, which enables the light emitted from the LED elements (L) to be transmitted over the entire sections thereof. In addition, the transmitting body 12 is manufactured from the injection or extrusion process or the like using the aforementioned light diffusion resin.

The circuit unit 20 is provided with a variety of electric and electronic elements mounted on the PCB (S) which is coupled with the base 11 of the luminescent body 10. The circuit unit 20 as the above is a construction which is electrically or electronically connected to the respective LED elements (L) and transforms the AC power inputted from the outside into the DC power for enabling the LED elements (L) to emit the light.

The circuit unit 20 has a basic construction including a power source part 40, a rectifying part 50, and an LED driving part 60. The power source part 40 is a construction for receiving an AC power to be a driving source of the illuminating device from the outside. At this point, the external AC power source has a voltage of 220V, a Korean Standard voltage, and the number of the LED elements (L) of the driving part 60 to be described below is designated accordingly.

Particularly, the power source part 40 further includes a fuse to interrupt the external power source in case of a particular situation. At this moment, the particular situation means that an excessive AC power exceeding the rating is inputted from the outside because of unexpected factors such as a short circuit or the like.

Meanwhile, the rectifying part 50 is constructed as a diode circuit to rectify the power inputted. Here, a bridge rectifier circuit is employed for the diode circuit.

The LED driving part 60 is configured as a serial connection of a plurality of the LED elements (L) and a resistance 61 in response to the aforementioned power source of 220 V. The LED driving part 60 as the above is a construction to operate the LED elements (L) with a desired voltage by using the rectified power provided from the rectifying part 50.

For more detailed descriptions, one example is raised as follows. With the external AC power of 220V inputted and the driving voltage of the LED elements (L) of 3.2V, when sixty (60) LED elements (L) are connected and aligned in series, the voltage of 192V is distributed and applied to the LED elements (L) to lower the voltage. Further, the remaining voltage of 8V is applied to the resistance serially connected to the LED elements (L), and then a stable circuit can be obtained.

Moreover, in order to extend the LED driving part 60 more, a plurality of groups, in which a plural LED elements (L) and a resistance (61) are connected in series to constitute one group, may be connected in parallel.

Meanwhile, the terminal part 30 is a power input construction which is installed at one end or both ends of the luminescent body 10. The terminal part 30 has a construction like a terminal for a fluorescent lamp secured to the opposite ends of the luminescent body 10 since the luminescent body 10 is configured in the form of the fluorescent lamp.

This terminal part 30 means that it is constructed to be used for applying the LED lamp device of the present invention to the ordinary socket for the fluorescent lamp or the halogen lamp, which is generally provided at the building, without any further works or alteration of such socket.

FIG. 14 is a view illustrating an exemplary operational state of another embodiment 1 of the present invention.

Referring to FIG. 14, the LED illumination device is so configured that when the light is emitted from a plurality of LED elements (L) mounted on the PCB (S), the emitted light is penetrated through the opposite surface which is in the form of a rectangular flat plate and then irradiated to the outside.

Here, the transmitting body 12 is manufactured from the light diffusion resin as mentioned above. Since the light emitted from the LED elements (L) tends to proceed straight, the inputted light is dispersed and diffused at the light transmitting surface of the transmitting body 12, which is concentratingly irradiated in a vertical downward direction (when the illuminating device is installed at the ceiling of the building) or in a lateral direction (when the illuminating device is installed on the wall or floor of the building).

Hence, it should be appreciated that much higher intensity of the illumination can be obtained since the light emitted from the LED elements (L) is concentratingly irradiated in a vertical downward direction or in a lateral direction. Particularly, it is possible to embody a desired indoor lighting by means of installing a plurality of the LED illuminating lamps inside the building which requires much higher intensity of the illumination.

### <Another embodiment 2>

Meanwhile, another embodiment 2 of the present invention will be described in detail with reference to the accompanying drawings.

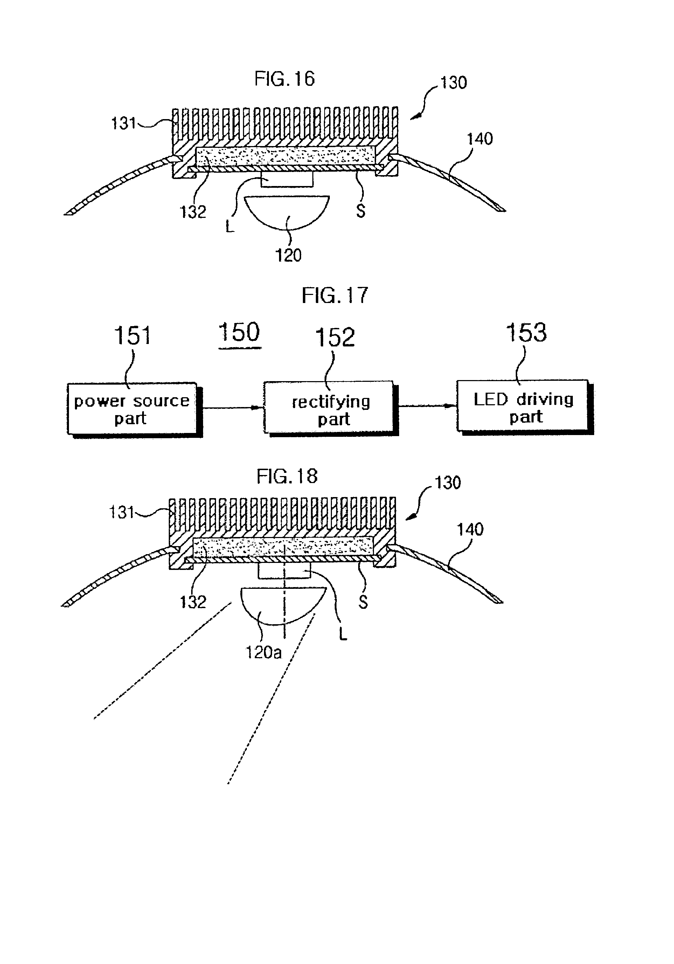

FIG. 15 is a perspective view illustrating another embodiment 2 of the present invention, and FIG. 16 is an enlarged cross-sectional view illustrating another embodiment 2 of the present invention.

Referring to the drawings, an LED illumination device in accordance with another embodiment 2 is composed of a LED illuminating lamp 110 and a lens 120 disposed within the LED illuminating lamp 110. At this point, the LED illuminating lamp 110 whose overall exterior shape is in the form similar to that of a fluorescent lamp can be installed to the ordinary socket for the fluorescent lamp provided inside or outside of the building, which can be applied as an indoor lighting.

Specifically, the LED illuminating lamp 110 consists of a base 130 having a heat radiating function and a light transmitting cover 140 for diffusing and transmitting the light being emitted. Further, the LED illuminating lamp 110 is provided with a circuit unit 150 which includes a variety of electric and electronic elements for driving the LED elements (L) after the LED elements (L) are mounted on the PCB (S).

The base 130 provides a space for installing the circuit unit 150, and the light transmitting cover 140 is a construction through which the light emitted from a plurality of aligned LED elements (L) mounted on the PCB (S) of the circuit unit 150 is transmitted and diffused to embody lighting.

Particularly, the base 130 is a construction formed in the shape of a beam having a lengthwise direction. The base 130 is provided with a heat radiating part 131 on the surface to which the PCB (S) is secured, i.e., a rear surface of the surface on which the light transmitting cover 140 is coupled, so as to radiate the heat discharged from the electric or electronic elements of the circuit unit 150 towards the outside. At this moment, in order to construct the heat radiating part 131 as such, the base 130 is made from aluminum materials with a high heat radiating efficiency, and the heat radiating part 131 may be provided with a plurality of heat radiating fins being projected to increase heat radiating areas as well.

In addition, the base 130 has a construction filled with a heat conducting resin 132in a gap between the PCB (S) and the heat radiating part 131 in order to deliver the heat generated at the LED elements (L) and the circuit unit 150 to the heat radiating part 131 through much larger areas. At this point, the heat conducting resin includes epoxy, silicone resin or the like with a high thermal conductivity and also functions to alleviate physical impacts delivered from the outer surface of the base 111.

Meanwhile, the transmitting body 140 is made by mixing a resin of an acrylic resin such as PC, PMMA, ABS, PS or the like or a resin which the light can be penetrated through and a light diffuser (refers to as a light diffusion resin hereinafter), and the transmitting body 412 is a construction in which the light emitted from the LED elements (L) is transmitted and diffused to embody lighting over the much broader section.

Generally, the transmitting body 140, as shown in the drawing, retains the entire shape of the LED illuminating lamp in a circular tube shape, otherwise it may be constructed in a polygonal tube shape. At this point, preferably, the transmitting body 140 has a construction to be disposed outside the LED elements (L) enclosing the same, which enables the light emitted from the LED elements (L) to be transmitted over the entire section thereof. In addition, the transmitting body 140 is manufactured from the injection or extrusion process or the like using the aforementioned light diffusion resin.

Particularly, a terminal 141 coupled with the socket of the ordinary fluorescent lamp for applying the power source is mounted at the both sides of the light transmitting cover 140. At this point, the terminal 141 is electrically connected to the aforementioned circuit unit 150 to apply the external power source thereto.

The terminal 141 as such is constructed to be used for applying the LED lamp device of the present invention to the ordinary socket for the fluorescent lamp or the halogen lamp, which is generally provided in the building, without any further works or alteration of such socket.

FIG. 17 is a block diagram illustrating a circuit unit in accordance with another embodiment 2 of the present invention.

Referring to FIG. 17, the circuit unit 150 is provided with a variety of electric and electronic elements mounted on the PCB (S) which is coupled with the base 130 of the LED illuminating lamp 110. The circuit unit 150 as the above is a construction which is electrically or electronically connected to the respective LED elements (L) and transforms the AC power inputted from the outside into the DC power for enabling the LED elements (L) to emit the light.

The circuit unit 150 has a basic construction including a power source part 151, a rectifying part 152, and an LED driving part 153. The power source part 151 is a construction for receiving an AC power source, a driving source of the illuminating device from the outside. At this point, the external AC power source has a voltage of 220V, a Korean Standard voltage, and the number of the LED elements (L) of the driving part 153 to be described below is designated accordingly.

Particularly, the power source part 151 further includes a fuse to interrupt the external power source in case of a particular situation. Here, the particular situation means that an excessive AC power exceeding the rating is inputted from the outside because of unexpected factors such as a short circuit or the like. Meanwhile, the rectifying part 152 is constructed as a diode circuit to rectify the power inputted. At this moment, a bridge rectifier circuit is employed for the diode circuit. The LED driving part 153 is configured as a serial connection of a plurality of the LED elements (L) and a resistance in response to the aforementioned power source of 220 V. The LED driving part 153 as the above is a construction to drive the LED elements (L) with a desired voltage by using the rectified power provided from the rectifying part 152.

For more detailed descriptions, one example is raised as follows. With the external AC power of 220V inputted and the driving voltage of the LED elements (L) of 3.2V, when sixty (60) LED elements (L) are connected and aligned in series, the voltage of 192V is distributed and applied to LED elements (L) to lower the voltage. Further, the remaining voltage of 8V is applied to the resistance serially connected to the LED elements (L), and then a stable circuit can be obtained.

Moreover, in order to extend the LED driving part 153 more, a plurality of groups, in which plural LED elements (L) and a resistance are connected in series to constitute one group, may be connected in parallel.

Meanwhile, the lens 120 is installed within the light transmitting cover 140 of the LED illuminating lamp 110. Here, the lens 120 is disposed in front of the LED elements (L) emitting light. For this purpose, supporting members can be extended at the opposite sides of the base 130, and the lens 120 can be secured to the supporting members.

Particularly, the lens 120 is configured to enable the light emitted from the LED elements (L) to penetrate therethrough while maintaining its constant direction and angle, and then to irradiate the light through the light transmitting cover 140. The lens is formed in the shape of a bar in response to the length of the LED elements (L) aligned in one direction.

The construction of the lens 120 can be fixed to change the irradiating direction and the irradiating length or the like while transmitting the light emitted from the LED elements (L). Such various fixing states are shown as the following drawings.

FIGs. 18 to 20 are views each illustrating an exemplary lens according to a light irradiating direction in accordance with another embodiment 2 of the present invention;

FIG. 18 illustrates such a construction that the light emitted from the LED elements (L) is irradiated while offset to the left-side in the drawing. For the purpose of this construction, the end portion from which the light of the lens 120a is irradiated is eccentrically formed to the left of the lens 120a.

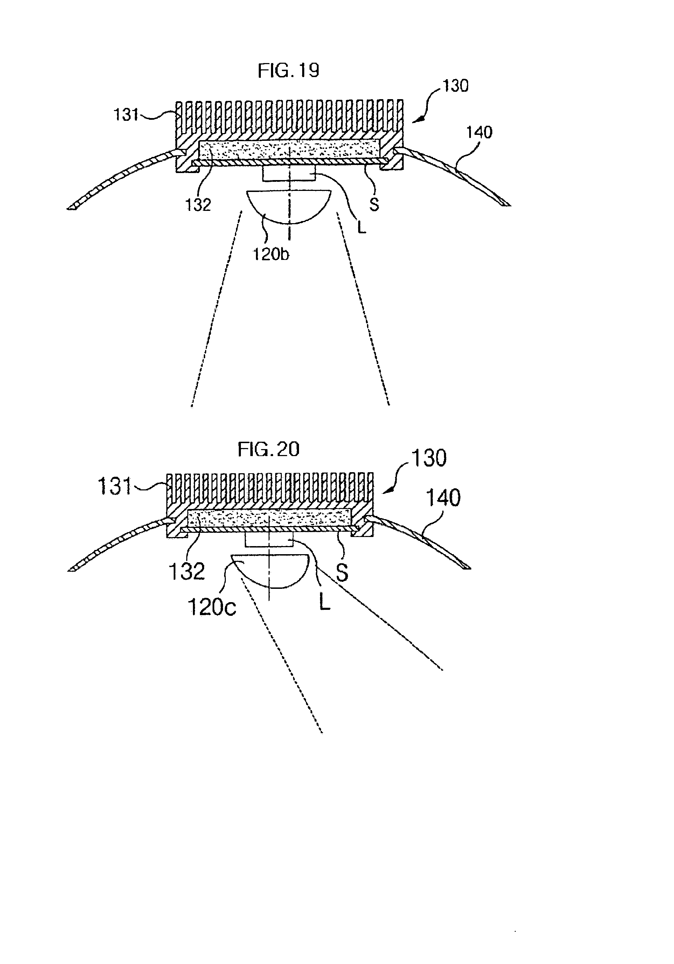

FIG. 19 is a construction to irradiate the light emitted from the LED elements (L) in a vertical downward direction. To this end, the end portion from which the light of the lens 120b is irradiated is in the central axis of the lens 120b.

FIG. 20, contrary to FIG. 18, illustrates such a construction that the light emitted from the LED elements (L) is irradiated while offset to the right-side in the drawing. For the purpose of this construction, the end portion from which the light of the lens 120c is irradiated is eccentrically formed to the right of the lens 120c.

Hence, with the construction as the above, the LED illumination device can embody a better lighting by setting such an orientation of the light that the light should be mainly irradiated in response to the location of the LED illuminating lamp 110 installed.

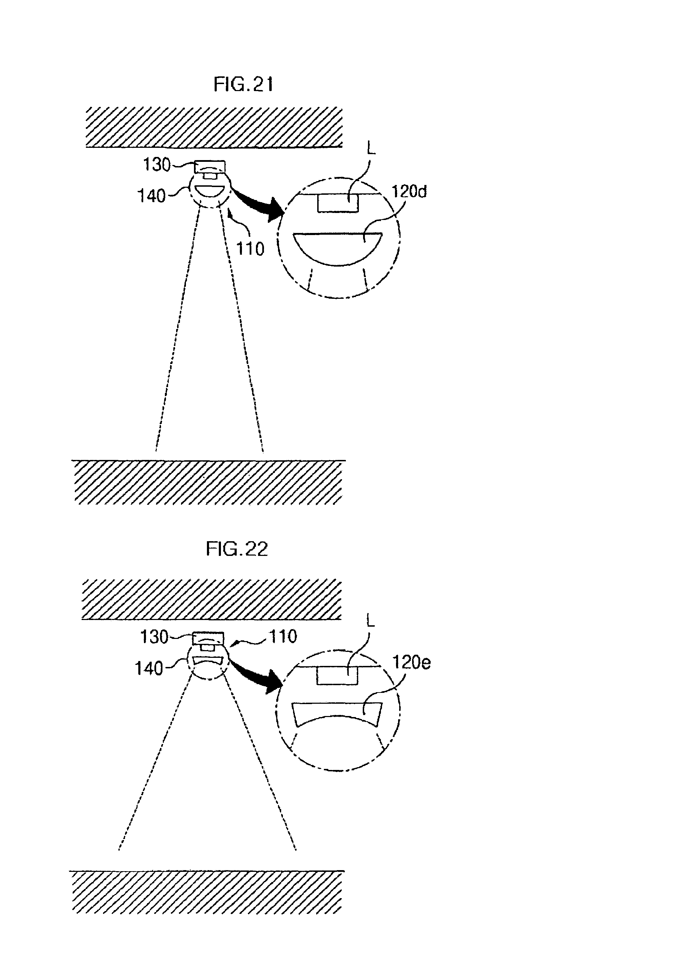

FIGs. 21 and 22 are exemplary views each illustrating a construction of the lens according to the light irradiating length in accordance with another embodiment 2 of the present invention.

Referring to FIG. 21, in order to irradiate the light emitted from the LED elements (L) in much lengthier patterns, the end portion from which the light of the lens 120d is irradiated is formed in the shape of a convex lens to narrow the irradiating angle of the light emitted therefrom. With the construction as the above, it allows to maintain a certain amount of the light in a much longer length after passing the light transmitting cover 140. Hence, for example, when the ceiling inside the building is high, the lighting can be maintained brightly to the floor surface.

Meanwhile, referring to FIG. 22, in order to irradiate the light emitted from the LED elements (L) in much shorter and broader patterns, the end portion from which the light of the lens 120e is irradiated is formed in the shape of a concave lens to broaden the irradiating angle of the light emitted therefrom. With the construction as the above, it allows to maintain the irradiating angle approximately less than 300° after passing the light transmitting cover 140. Unlike the case as described above, when the ceiling inside the building is low, it enables the light to be irradiated in much broader ranges, thereby reducing the number of the LED lamp device to be installed in a unit space.

As shown in FIGs. 18 to 22, it is possible to install optimized illuminating devices with respect to various conditions of the desired space by mixed applications of the irradiating direction and angle settings on the light through the lenses 120a to 120e.

### <Another embodiment 3>

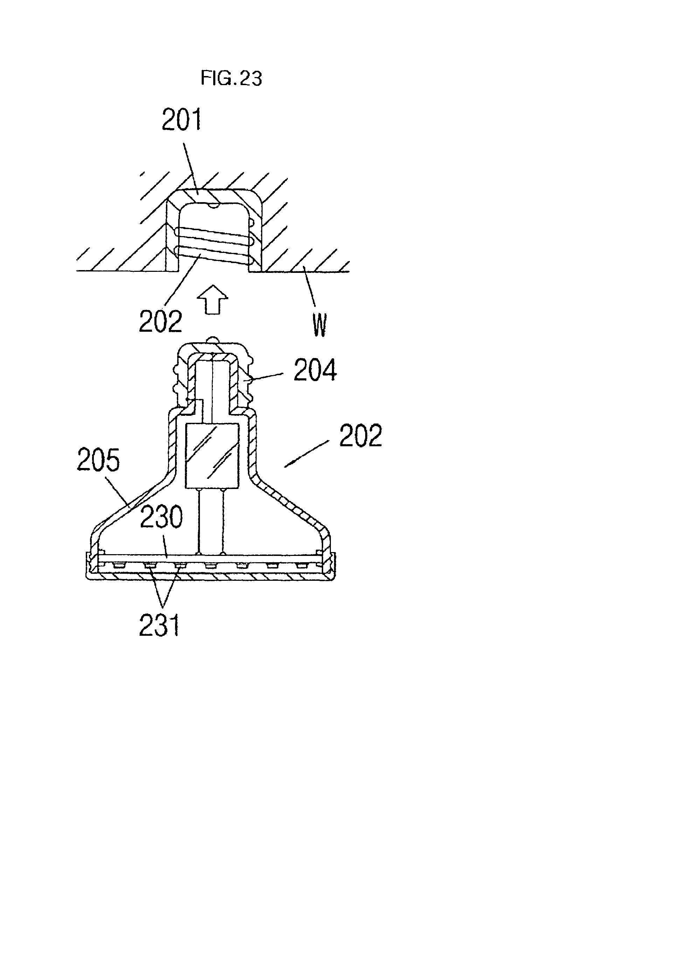

FIG. 23 is an enlarged cross-sectional view illustrating another embodiment 3 of the present invention.

Referring to the drawing, the LED lamp device of another embodiment 3 of the present invention is composed of a socket 201 and an LED module 202. Here, the socket 201 is electrically connected to an external power line and designed to have internal wirings in order to input an AC power to the LED module 202.

The LED module 202 is formed with a screw fitting part 204 at one side which is correspondingly coupled with a screw fitting hole 203 of the socket 201 so as to be electrically coupled with the socket 201. The LED module 202 as such is configured in a bulb shape which enables the LED elements 231 to emit light upon receiving the AC power source 211.

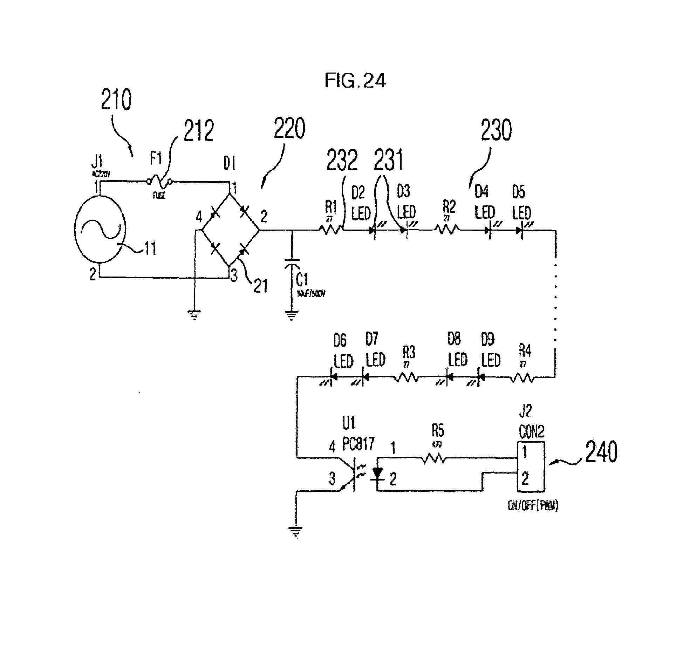

For this purpose, the LED module 202 is constructed to include a case 205 formed with the screw fitting part 204 at one side while maintaining a bulb shape, and a circuit unit mounted on a printed circuit board or the like within the case 205. At this point, the construction of the circuit unit for the LED module 202 is shown in FIG. 24.

FIG. 24 is a circuit diagram of the LED module in accordance with another embodiment 3 of the present invention.

Referring to FIG. 24, the circuit unit of the LED module has a basic construction including a power source part 210, a rectifying part 22, and an LED driving part 230.

The power source part 210 is a construction for receiving the AC power source 211 to be a driving source of the illuminating device from the outside, including a screw fitting part 204 as described above. In this embodiment, the external AC power source 211 has a voltage of 220V, a Korean Standard voltage, and the number of the LED elements 231 of the driving part 230 as described below is designated accordingly.

Particularly, the power source part 210 includes a fuse 212 to interrupt the external power source in case of a particular situation. At this moment, the particular situation means that an excessive AC power source 211 exceeding the rating is inputted from the outside because of unexpected factors such as a short circuit or the like.

The rectifying part 220 is constructed as a diode circuit to rectify the power inputted. Here, a bridge rectifier circuit 221 is employed for the diode circuit.

Meanwhile, the LED driving part 230 is configured as a serial connection of a plurality of the LED elements 231 and a resistance 232 in response to the aforementioned power source of 220 V. The LED driving part 230 is a construction to drive the LED elements 231 with a desired voltage by using the rectified power provided from the rectifying part 220.

In other words, as shown in the drawings, when the external AC power of 220V is inputted and the driving voltage of the LED elements 231 is 3.2V, it is possible to provide a stable circuit by arranging sixty (60) LED elements 231 to which the voltage of 192V is distributed and applied, while the remaining voltage of 8V being applied to the resistance.

In order to extend the LED driving part 230 more, a plurality of groups, in which plural LED elements 231 and a resistance 232 in series constitute one group, is connected in parallel.

With the construction as the above, the LED lamp device is constructed to include a controller 240 in order to control the luminance of the LED elements 231 being driven. At this moment, the controller 240 is configured to manipulate the luminance of the LED elements 231 by controlling the amount of the input current through PWM controls.

### <Another embodiment 4>

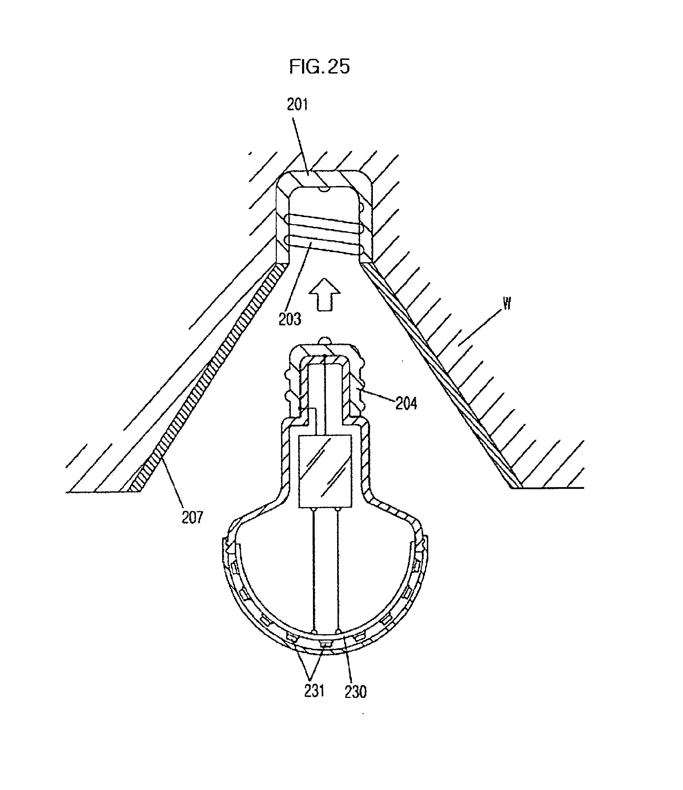

FIG. 25 is an exemplary view illustrating another embodiment 4 of the present invention.

Referring to FIG. 25, an LED lamp device of the another embodiment 4 is a modified construction from that of the another embodiment 3, wherein the LED driving part 230 of the LED module 202 is disposed in an approximately semi-circular shaped round pattern, so as to expand the irradiating angle of the light.

Here, it can be noted that a recess 206 with a certain depth is formed in the inner surface of the ceiling (W) at which the socket 201 is embedded, and a reflector 207 is provided at the inner periphery of the recess 206. Such construction enables the light emitted over the angle of 180° from the LED elements 231, which are aligned in a round pattern, to be reflected and irradiated in a downward direction.

Although several exemplary embodiments of the present invention have been described for illustrative purposes, those skilled in the art will appreciate that various modifications, additions and substitutions are possible, without departing from the scope and spirit of the invention as disclosed in the accompanying claims.

## Claims

1. An LED lamp device, comprising:
a luminescent body 410 wherein a plurality of LED elements (L) is arranged in the form of an illuminating lamp and coupled on at least one side of a base 411 where each component is installed, wherein a transmitting body 412 is secured at the location where the LED elements (L) of the base 411 are disposed, and wherein the light emitted from the LED elements (L) is penetrated and diffused through the transmitting body 412;
a circuit unit 420 installed on the base 411 of the luminescent body 410 and connected to the respective LED elements (L) electrically and electronically for transforming an AC power inputted from the outside into a DC power to enable the LED elements (L) to emit light; and
a terminal part 430 disposed one end or both ends of the luminescent body 410 for receiving the AC power from the outside and inputting the same to the circuit unit 420.

2. The device as recited in claim 1, wherein the circuit unit 420 includes a power source part 440 for receiving an AC power to be a driving source of the device from the outside; a rectifying part 450 for rectifying the inputted power through a bridge rectifier circuit 451; and a LED driving part 460 for driving the LED elements (L) with a rectified power provided by the rectifying part 450 and with a desired voltage provided by a plurality of LED elements (L) and a resistance 461 connected in series in response to the inputted power.

3. The device as recited in claim 2, wherein the circuit unit 420 includes a dimming part 470 which can modulate the driving luminance of the LED elements (L) through PWM controls by controlling the amount of the current to be inputted.

4. The device as recited in claim 3, wherein the dimming part 470 includes a sensing part 471 for detecting a signal to modulate the luminance of lighting depending upon environmental factors such as luminance of the inside or outside of a room, a noise level or the like.

5. The device as recited in claim 3, wherein the dimming part 470 is subjected to be manually controlled by a wired or wireless connection through a remote controller 472.

6. The device as recited in claim 2, wherein the circuit unit 420 further includes an input voltage controlling part 480 for limiting the current supply to drive the LED elements (L) by monitoring an AC voltage inputted to the bridge rectifier circuit 451 and a DC voltage having passed the bridge rectifier circuit 451.

7. The device as recited in claim 2, wherein the circuit unit 420 further includes an output current controlling part 490 for controlling an over-current applied to the LED elements (L) by connecting a shunt resistor 491 to the LED elements (L) and amplifying the voltage value detected at the shunt resistor 491.

8. The device as recited in any of claims 1 to 7, wherein the base 411 is coupled with a PCB (S), on which the LED elements (L) and the circuit unit 420 is installed, at the side portion where the transmitting body 412 is secured to, and wherein the base 411 is formed with a heat radiating part 413 at the rear surface of the surface to which the transmitting body 412 is secured for discharging the heat generated in the LED elements (L) and the circuit unit 420.

9. The device as recited in claim 9, wherein the base 411 is constructed to be filled with heat conducting resins into a gap between the PCB (S) and the heat radiating part 413 so as to increase a transferring area in which the heat generated in the LED elements (L) and the circuit unit 420 is delivered to the heat radiating part 413 through the PCB (S).

10. The device as recited in claim 8, wherein the base 411 is constructed to be separated into both sides to allow the PCB (S) to be coupled therein, and the separated base 411 is coupled with both sides of the PCB (S) and then fastened by a fastening means to be a unitary one.

11. An LED lamp device, comprising:
a luminescent body 10 wherein a plurality of LED elements (L) is arranged in the form of an illuminating lamp and coupled on at least one surface of a base 11 on which each component is installed, wherein a transmitting body 12 in the form of a rectangular-cross sectional flat plate is secured at a location where the LED elements (L) of the base 11 are disposed, and wherein the light emitted from the LED elements (L) concentratingly discharges after penetrating the opposite flat surfaces of the transmitting body 12;
a circuit unit installed on the base 11 of the luminescent body 10 and connected to the respective LED elements (L) electrically and electronically for transforming an AC power inputted from the outside into a DC power to enable the LED elements (L) to emit light; and a terminal part 30 disposed one or both ends of the luminescent body 10 for providing the AC power inputted from the outside to the circuit unit 20.

12. The device as recited in claim 11, wherein the base 11 is coupled with a PCB (S), on which the LED elements (L) and the circuit unit 20 are installed, at the side portion where the transmitting body 12 is secured to, and wherein the base 11 is formed with a heat radiating part 13 at the rear surface of the surface to which the transmitting body 12 is secured for discharging the heat generated in the LED elements (L) and the circuit unit 20.

13. The device as recited in claim 12, wherein the base 11 is constructed to be filled with heat conducting resins into a gap between the PCB (S) and the heat radiating part 13 so as to increase a transferring area in which the heat generated in the LED elements (L) and the circuit unit 20 is delivered to the heat radiating part 13 through the PCB (S).

14. The device as recited in claim 11, wherein the circuit unit 20 includes a power source part 40 for receiving an AC power to be a driving source of the device from the outside; a rectifying part 50 for rectifying the inputted power through a bridge rectifier circuit; and a LED driving part 60 for driving the LED elements (L) using the rectified power provided by the rectifying part and using a desired voltage provided by a plurality of LED elements (L) connected in series in response to the inputted power.

15. The device as recited in any of claims 11 to 14, wherein the transmitting body 12 is made from a light diffusion resin in order to irradiate the light by diffracting and diffusing the same when the light emitted from the LED elements (L) is penetrated therethrough.

16. An LED lamp device, comprising:
an LED illuminating lamp 110 in the form of a fluorescent lamp wherein LED elements (L) are arranged in one direction to emit light by an external power source, wherein the LED illuminating lamp is provided with a tube shaped light transmitting cover 140 in an outward direction of the light emitted from the LED elements (L), and wherein the LED illuminating lamp is provided with a terminal 141 coupled with a socket of the fluorescent lamp at the both sides of the light transmitting cover 140 for applying the power source; and
a lens disposed in front of the LED elements (L) within the light transmitting cover 140 of the LED illuminating lamp 110 for allowing the light emitted from the LED elements (L) to be penetrated therethrough while maintaining a constant direction and angle of the light and irradiating the same through the light transmitting cover 140.

17. The device as recited in claim 16, wherein the LED elements (L) are provided with a circuit unit 150 so as to be installed at a socket of a fluorescent lamp applying a general AC power and then driven thereby, wherein the circuit unit 150 includes a rectifying part 152 for rectifying the AC power inputted through the socket of the fluorescent lamp with a bridge rectifier circuit; and a LED driving part 153 for driving the LED elements (L) with a rectified power provided by the rectifying part 152 and with a desired voltage provided by a plurality of LED elements (L) connected in series in response to the inputted power.

18. The device as recited in claim 16 or 17, wherein the lens 120 is formed in the shape of a bar in response to the length of the LED elements (L) aligned in one direction.

19. The device as recited in claim 16 or 17, wherein each end portion of the lens 120a to 120c, through which the light is irradiated, is eccentrically formed at either radial side or a center side of the circular cross-section of the light transmitting cover 140 in order to establish the irradiating direction of the light.

20. The device as recited in claim 19, wherein, the lens 120d is formed with a convex inclined surface in the irradiating direction of the light to illuminate the light with a narrow angle and an extending length.

21. The device as recited in claim 19, wherein the lens 120e is formed with a concave inclined surface in the irradiating direction of the light to illuminate the light with a wide angle and a short length.

22. An LED lamp device, comprising:
a socket 201 for inputting an external AC power 211, and a bulb-shaped LED module 202 electrically coupled with the socket 201 for enabling LED elements 231 to emit light by receiving the AC power,
wherein the LED module 202 includes a power source part 210 for receiving the AC power source 211 to be a driving source of the device from the outside;
a rectifying part 220 for rectifying the inputted power through a bridge rectifier circuit 221; and
a LED driving part 230 for driving the LED elements 231 with a rectified power provided by the rectifying part 220 and with a desired voltage provided by a plurality of LED elements 231 and a resistance 232 connected in series in response to the inputted power.

23. The device as recited in claim 22, wherein the LED module 202 is so constructed that the LED elements 231 of the LED driving part 230 are disposed in a round pattern at its end portion, through which the light is irradiated, to expand the irradiating angle of the light.

24. The device as recited in claim 22, wherein the power source part 210 includes a fuse 212 to interrupt the power input when an excessive AC power exceeding the rating is inputted from the outside.

25. The device as recited in claim 22, further comprising a controller 240 for modulating the luminance of the LED elements 231 by controlling the amount of the input current through a PWM control.

26. The device as recited in any of claim 22 to 25, wherein the LED driving part 230 is composed of a plurality of groups in parallel in which one group consists of a plurality of the LED elements 231 and a resistance 232 in series.
